Europäisches Patentamt

European Patent Office

Office européen des brevets

(19)

(11) Numéro de publication: **0 261 026**
**A1**

(12)
# DEMANDE DE BREVET EUROPEEN

(21) Numéro de dépôt: **87402044.9**

(22) Date de dépôt: **14.09.87**

(51) Int. Cl.⁴: **B 23 Q 5/58**
B 23 Q 11/00, F 16 P 3/00

(30) Priorité: **16.09.86 FR 8612936**

(43) Date de publication de la demande:
**23.03.88 Bulletin 88/12**

(84) Etats contractants désignés: **DE GB IT SE**

(71) Demandeur: **COMMISSARIAT A L'ENERGIE ATOMIQUE**
**31/33, rue de la Fédération**
**F-75015 Paris (FR)**

(72) Inventeur: **Barreault, Jacques**
**11 rue de Chenonceau**
**F-37300 Jour-Les-Tours (FR)**

**Brule, Bernard**
**36 rue des Mimosas**
**F-37250 Montbazon (FR)**

**Calonne, Gilles**
**20 rue Gabriel Fauré**
**F-37260 Monts (FR)**

**Comparon, Jean-Luc**
**"Gue Droit" Sache**
**F-37190 Azay-Le-Rideau (FR)**

**Galle, Jean-Claude**
**18, rue du 8 mai 1945**
**F-37320 Esvres (FR)**

**Gatillon, Gilles**
**"Les Reinières,"**
**F-37320 Esvres (FR)**

**Patout, Francis**
**Vaugourdon**
**F-37250 Veigne (FR)**

**Robin, Patrick**
**9, rue des Anciens A.F.N.**
**F-37220 Esvres (FR)**

(74) Mandataire: **Mongrédien, André et al**
**c/o BREVATOME 25, rue de Ponthieu**
**F-75008 Paris (FR)**

(54) **Dispositif de sécurité pour le dégagement d'un opérateur de machine.**

(57) Une machine outil comprend un moteur (14) relié à une source de puissance principale. Le dispositif selon l'invention, adapté à cette machine, comporte une source de puissance auxiliaire (22), un moyen pour couper l'alimentation en puissance du moteur (14) de la machine par la source de puissance principale (6) et pour connecter simultanément ce moteur à la source de puissance auxiliaire (22), un moyen pour commander le moteur à petite vitesse et un moyen pour commander le moteur dans un sens voulu. La source de puissance électrique auxiliaire (22) est utilisée comme source électrique pour alimenter en courant électrique ladite bobine (60) d'un relais, un interrupteur (62) étant prévu pour commander la fermeture du circuit d'alimentation électrique de la bobine (60) du relais.

FIG. 3

EP 0 261 026 A1

## Description

### DISPOSITIF DE SECURITE POUR LE DEGAGEMENT D'UN OPERATEUR DE MACHINE

L'invention concerne un dispositif de sécurité pour le dégagement, en particulier par lui-même, d'un opérateur de machine, notamment d'une machine-outil.

Une machine-outil telle qu'un tour ou une fraiseuse comporte un ou plusieurs moteurs, généralement électrique(s) ou hydraulique(s) qui entraîne(nt) des organes mobiles tels que par exemple un chariot, une table ou une broche tournante.

Il est bien connu que de telles machines sont dangereuses pour leur opérateurs étant donné la puissance et la vitesse de déplacement de leurs organes mobiles. En cas d'accident, l'opérateur peut se trouver immobilisé et incapable de se dégager par lui-même. Si d'autres personnes sont présentes sur les lieux de l'accident, elles peuvent bien entendu se porter au secours de l'opérateur. Cependant, il arrive que ce dernier soit seul dans l'atelier où il travaille. Ceci est notamment le cas des opérateurs manipulant des substances explosives. Afin de limiter les risques pour les autres, ces opérateurs travaillent en merlon. Un merlon est un atelier de béton présentant des parois de forte épaisseur recouvertes de terre sur leurs côtés et une toiture légère qui se soulève aisément en cas d'explosion. Dans ce bâtiment, un opérateur travaille seul et isolé vis-à-vis de l'extérieur, les merlons étant distants de 50 à 60 mètres les uns des autres. L'invention s'applique de façon particulièrement avantageuse à ce cas, mais il va de soi qu'elle ne se limite pas à cette application et que bien d'autres applications peuvent être trouvées dans tous les genres d'industries.

Il est vrai que les machines-outils de type classique comportent toujours un dispositif d'arrêt d'urgence appelé "coup de poing" qui coupe la mise sous tension (dans le cas d'une machine entraînée par un moteur électrique) ou la mise en pression (dans le cas d'une machine comportant un moteur hydraulique). Toutefois, le coup de poing n'est pas suffisant pour permettre à l'opératur de se dégager. En effet, même si ce dernier reste conscient, pour des raisons diverses il n'a généralement pas la possibilité de rétablir l'alimentation électrique ou hydraulique et d'agir sur les organes de la machine. En particulier, certaines machines nécessitent l'utilisation des deux mains pour le réarmement après déverrouillage du coup de poing. De toute façon, le réarmement du coup de poing ne rétablit pas l'alimentation électrique de la machine. Enfin, les commandes de la machine sont peu accessibles à un opérateur immobilisé, notamment dans les machines de taille importante telles que par exemple un tour vertical possédant un plateau d'un diamètre de 1 à 2 mètres.

En outre, dans le cas de machines équipées de moteurs hydrauliques, ces moteurs sont commandés par un dispositif complexe d'asservissement comportant notamment une centrale hydraulique qui commande des servo-vannes. Le fonctionnement des différents organes de cet asservissement et donc de la centrale hydraulique nécessite une alimentation électrique. L'ensemble est tel que lorsque la centrale hydraulique, étant initialement hors de tension, est à nouveau alimentée électriquement (remise sous tension de la machine), l'outil effectue un déplacement intempestif plus ou moins important. Ce déplacement est fonction de la position aléatoire dans laquelle se placent certains éléments du servomécanisme au moment de l'arrêt de la machine. Ce phénomène, qui a lieu à chaque remise sous tension de la machine, est appelé "pompage". Bien entendu, en cas d'accident dans lequel un opérateur aurait un membre pris par un outil, il est important d'éliminer ce phénomène qui risquerait d'accentuer les conséquences de l'accident.

On connaît par ailleurs des machines-outils à commande numérique qui comportent un dispositif, piloté par une bande magnétique ou une bande de carton perforé qui commandent les déplacements des organes de la machine selon un programme d'usinage préétabli.

De telles machines présentent l'avantage d'être plus performantes du point de vue de la rapidité d'usinage d'une pièce qu'une machine de type classique, mais elles restent aussi dangereuses qu'une machine commandée manuellement. En outre, une coupure accidentelle de l'alimentation électrique de l'armoire de commande numérique peut modifier de manière incontrôlée les données du programme : introduction de données erronées, effacement de données... La logique de la commande numérique impose donc, à la suite d'une coupure, une remise à zéro pour permettre à l'opérateur de reprendre les opérations avec des données connues et qu'il contrôle bien et éviter ainsi toute erreur.

La présente invention a pour objet un dispositif de sûreté pour le dégagement d'un opérateur de machine, notamment de machines-outils qui remédie aux inconvénients énumérés ci-dessus, qu'il s'agisse des inconvénients communs à tous les types de machines-outils ou des inconvénients spécifiques à certains types de machines comme les machines à moteurs hydrauliques ou à commande numérique.

Ce dispositif de sûreté a pour fonction de permettre à un opérateur, même seul, de se dégager par lui-même en actionnant la commande des organes mobiles de la machine-outil. Ce dégagement doit être possible même si l'opérateur est éloigné de la commande d'arrêt d'urgence normalement prévue sur la machine. En outre, dans le cas d'une machine à commande hydraulique, l'actionnement des organes mobiles de la machine ne doit pas occasionner le phénomène de pompage mentionné ci-dessus et qui aurait pour conséquence d'aggraver les suites de l'accident.

Enfin, dans le cas d'une machine à commande numérique, le dispositif de sûreté doit permettre que les informations concernant la position spatiale de l'outil de la machine ne soient pas effacées de manière à permettre une remise en route de la machine sans avoir à effectuer une remise à zéro de la logique de commande numérique et à recommencer la procédure de recherche du point d'origine.

Ces objectifs sont atteints conformément à l'invention, grâce au fait que le dispositif de sécurité pour le dégagement par lui-même d'un opérateur de machine, notamment d'une machine-outil, cette machine comprenant au moins un moteur relié à une source de puissance principale et entraînant un organe mobile comporte :
- une source de puissance auxiliaire,
- un moyen pour couper l'alimentation en puissance du moteur de la machine par la source de puissance principale et pour connecter simultanément ce moteur à la source de puissance auxiliaire,
- un moyen pour commander le moteur à petite vitesse et dans un sens voulu.

Grâce à ces caractéristiques, l'opérateur de la machine est en permanence apte à commander dans un sens voulu le déplacement de chacun des organes de la machine et ceci sans qu'il soit nécessaire d'effectuer une remise à zéro des données stockées dans les mémoires de la commande numérique. En outre, dans le cas où la machine est équipée d'un moteur hydraulique, ces organes peuvent être entraînés sans que le phénomène de pompage se produise.

De préférence, la source de puissance auxiliaire est reliée audit moteur par un conducteur électrique aller et un conducteur électrique retour et les moyens pour couper l'alimentation en puissance de ce moteur par la source principale sont constitués par un relais comprenant une bobine, au moins un premier contact qui est en position ouverte lorsque la bobine n'est pas alimentée en courant électrique et au moins un second contact qui est en position fermée lorsque la bobine est alimentée en courant électrique, ledit premier contact étant monté sur l'un au moins des conducteurs électriques reliant la source de puissance auxiliaire au moteur, ledit second contact étant monté sur au moins un conducteur électrique reliant la source de puissance principale au moteur, la source de puissance électrique auxiliaire étant utilisée comme source électrique pour alimenter en courant électrique ladite bobine, un interrupteur étant prévu pour commander la fermeture du circuit d'alimentation électrique de la bobine du relais.

D'autres caractéristiques et avantages de l'invention apparaîtront encore à la lecture de la description qui suit d'un exemple de réalisation donné à titre illustratif et nullement limitatif en référence aux figures annexées sur lesquelles :
- la figure 1 représente un schéma synoptique pour la commande d'une machine-outil à commande numérique de type connu,
- la figure 2 représente un schéma de princip d'une installation de commande d'une machine-outil comportant un boîtier de dégagement conforme à l'invention,
- la figure 3 est un schéma de principe de l'alimentation en puissance électrique et de la commande d'une fraiseuse comportant un dispositif de sécurité conforme à l'invention,
- la figure 4 est une vue en élévation latérale d'une fraiseuse sur laquelle on a installé un dispositif de sécurité conforme à l'invention,
- la figure 5 est une vue de la face avant d'un boîtier de dégagement conforme à l'invention.

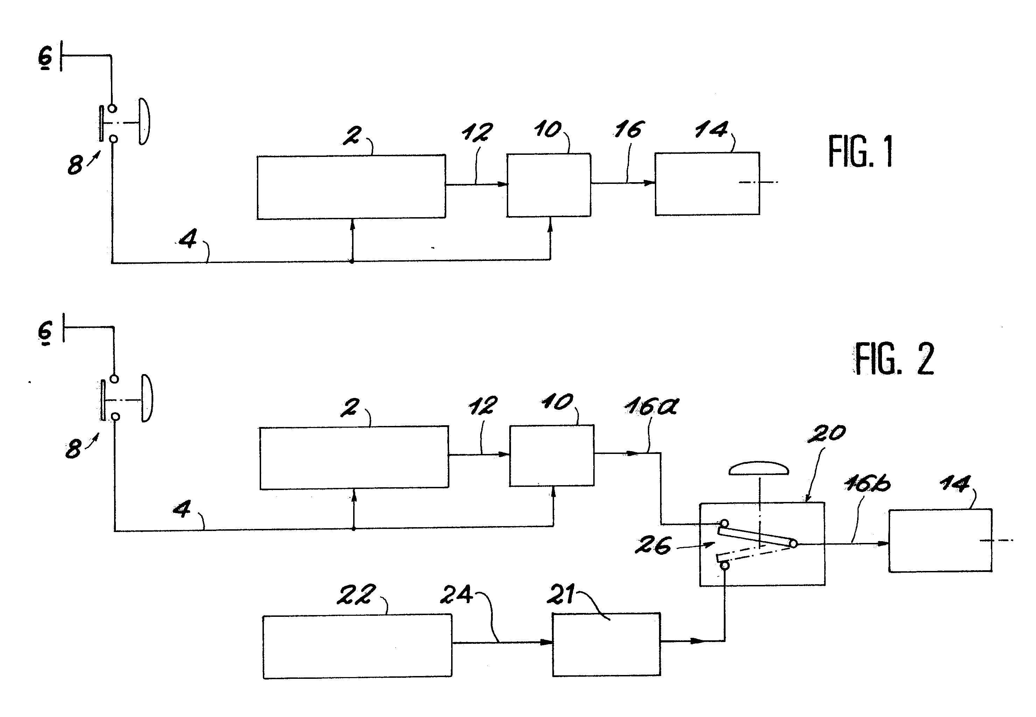

On a représenté sur la figure 1 un schéma synoptique d'un dispositif de commande d'une machine-outil à commande numérique de type connu. Le dispositif de commande numérique 2 est alimenté en courant électrique par l'intermédiaire d'une ligne 4 reliée à une source de puissance 6 constituée par exemple par le secteur. Un interrupteur du type coup de poing est intercalé sur la ligne 4 entre la commande numérique 2 et le secteur 6. Le variateur 10 est alimenté en courant électrique à partir du secteur 6 d'une part directement par la ligne 4, et d'autre part par une ligne 12 qui provient de la commande numérique. L'installation comporte en outre un ou plusieurs moteurs 14 d'entraînement des axes de la machine reliés aux variateurs par une ligne d'alimentation en puissance 16. Si la machine comporte trois axes, elle aura généralement un moteur pour entraîner chaque axe.

Pendant le fonctionnement normal de cette installation connue, le coup de poing n'est pas actionné. La commande numérique 2 est donc alimentée en permanence en courant électrique à partir du secteur 6. Un programme de commande d'usinage est fourni à la commande numérique, par exemple sous la forme d'une bande de papier perforé, ou par une bande magnétique. A partir de ce programme, la commande numérique délivre des signaux électriques, généralement analogiques, aux variateurs 10. Le variateur commande le sens de rotation du moteur, ainsi que la vitesse de rotation de ce moteur. A cet effet, il délivre un courant électrique de puissance par la ligne 16 au moteur 14 d'entraînement d'avance des axes.

En cas d'incident, l'opérateur de la machine actionne le coup de poing 8, qui se présente sous la forme d'un interrupteur dont le bouton poussoir est de grande dimension de manière à pouvoir être actionné rapidement, ce qui interrompt l'alimentation en courant électrique de la commande numérique 2 du variateur 10 et des moteurs 14. La machine s'arrête donc dans la position où elle se trouvait au moment où le coup de poing a été actionné. Toutefois, ce dispositif présente un certain nombre d'inconvénients.

D'une manière générale, le coup de poing 8 se trouve à la portée de l'opérateur dans une position normale de travail. Mais dans certaines circonstances, il peut se trouver hors d'atteinte, par exemple si l'opérateur est amené à se déplacer pour effectuer un réglage ou bien s'il est immobilisé accidentellement.

En outre, lorsque le coup de poing a été actionné, la commande numérique n'est plus alimentée en courant électrique, ce qui efface les données du programme introduites dans la mémoire vive de la commande numérique. Un remise à zéro est donc nécessaire pour reprendre les opérations avec des données connues et éviter toute erreur.

On a représenté sur la figure 2 un schéma de principe d'une installation de commande d'une machine-outil comportant un boîtier de dégagement conforme à l'invention. La commande numérique 2 d'alimentation 6, le coup de poing 8, le variateur 10, les lignes de courant électrique 4 et 12 ont été désignés par des références identiques. Leur installation est d'ailleurs la même que dans la figure 1. En revanche, le moteur 14 (ou les moteurs 14) d'entraînement d'avance des axes est alimenté en courant électrique par l'intermédiaire de deux lignes 16a et 16b et qui transitent par un boîtier de dégagement 20. En d'autres termes, le boîtier de dégagement 20 est intercalé sur la ligne d'alimentation en courant électrique qui relie le variateur 10 aux moteurs 14a, 14b, 14c d'entraînement d'avance des axes. De plus, le boîtier de dégagement comprend des moyens 20a, 20b, 20c, qui permettent de commander les moteurs dans un sens de rotation voulu. La structure de ces moyens sera expliquée plus en détail ultérieurement. L'installation comprend en outre une source de puissance auxiliaire 22, constituée par exemple par une ou plusiurs batteries électriques. La source 22 alimente le boîtier de dégagement 20 par l'intermédiaire d'une ligne 24. Le boîtier comport un interrupteur commandé par un bouton poussoir de type coup de poing 26, la ligne 16a est connectée à une entrée de l'interrupteur 26 tandis que la ligne 24 est connectée aux moyens 21. Lorsque le bouton poussoir du coup de poing 26 n'est pas actionné, le fonctionnement de l'installation est identique à celui qui a été décrit en référence à la figure 1. En d'autres termes, le moteur 14 d'entraînement de l'avance des axes est alimenté en courant électrique par le variateur électronique 10 par l'intermédiaire de la ligne 16a et 16b.

Lorsque le coup de poing 26 est actionné, l'alimentation en courant électrique de puissance par le variateur 10 du moteur 14 est interrompue et la source auxiliaire 22 est substituée au secteur 6 pour l'alimentation en courant électrique du moteur 14. On constate sur la figure 2 que cette alimentation se fait directement, c'est-à-dire sans l'intermédiaire de la commande numérique et du variateur 10. Les moyens 21 permettent d'inverser la polarité de la source 22, donc le sens de rotation du moteur 14.

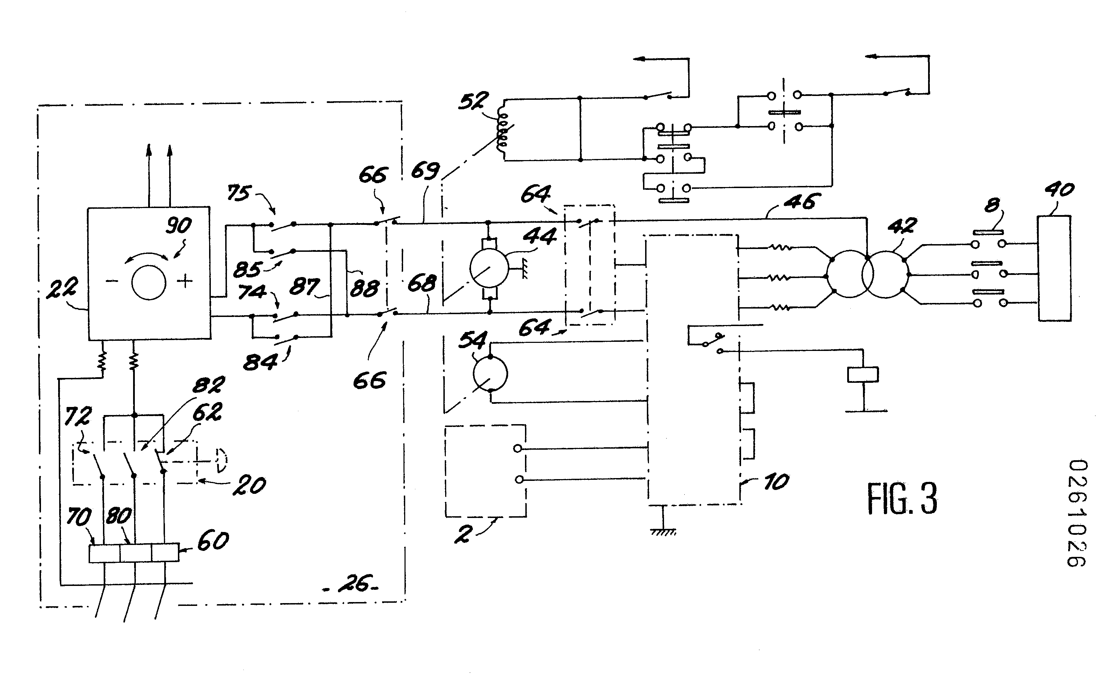

On a représenté sur la figure 3 un schéma de principe d'alimentation en puissance électrique et de commande d'une fraiseuse comportant un dispositif de sécurité conforme à l'invention incluant un boîtier de dégagement. La fraiseuse comporte plusieurs moteurs. Toutefois, par souci de simplification, un seul moteur a été représenté étant bie n entendu qu'une installation analogue à celle représentée sur la figure 3 peut être prévue pour chacun des moteurs entraînant un axe de la fraiseuse.

L'alimentation en courant électrique du moteur est constituée par une source de courant triphasé 40 dont la tension est abaissée par un transformateur 42. La tension plus faible disponible aux bornes de ce transformateurr est fournie aux variateurs électroniques 10, le moteur 14 est alimenté par l'une des phases de ce moteur et par une ligne connectée au point neutre du transformateur.

Comme on l'a expliqué en référence aux figures 2 et 3, l'alimentation générale du moteur peut être interrompue par un interrupteur de type coup de poing situé en amont du transformateur 42 et désigné par la référence 8.

Un frein 52 et un tachymètre 54 sont montés sur l'axe du moteur M. Le tachymètre 54 permet de détecter la vitesse de rotation et le sens de rotation du moteur 14 et de fournir un signal représentatif de ces deux vitesses aux variateurs 10.

Le boîtier de dégagement 20 dont le principe a été expliqué en référence à la figure 2 sera maintenant décrit plus en détail.

Le coup de poing 26 comprend une bobine 60 et un interrupteur 62. Lorsque le coup de poing est en position de repos, l'interrupteur 62 est ouvert et la bobine 60 n'est pas alimentée. Lorsque le coup de poing est actionné, l'interrupteur 62 est fermé et la bobine 60 est alimentée en courant électrique par la source auxiliaire de courant continu 22. La bobine 60 actionne donc une pluralité de contacts de repos et de contacts de travail. Conformément à la norme européenne NF C03-103 on appelle contact de travail ou contact à fermeture un contact qui est ouvert lorsque la bobine n'est pas sous tension. Ce contact se ferme lorsque la bobine est mise sous tension. On appelle contact de repos ou contact à ouverture un contact qui est normalement fermé lorsque la bobine n'est pas sous tension et qui s'ouvre lorsque cette bobine est mise sous tension. En conséquence, lorsque la bobine est mise sous tension, les contacts de repos s'ouvrent tandis que les contacts de travail se ferment.

On a prévu un contact de repos 64 sur chacune des lignes aller et retour qui alimentent le moteur 14 en courant électrique à partir du variateur 10. Lorsque le coup de poing n'est pas actionné, ces contacts sont normalement fermés, de telle sorte que le moteur 14 est alimenté en puissance à partir du secteur 10, comme on l'a décrit précédemment. Par ailleurs, on a monté un contact de travail 66 sur chacune des lignes aller et retour qui alimentent le moteur 14 en courant électrique à partir de la source auxiliaire de courant continu 22. Les contacts de travail 66 sont normalement en position ouverte lorsque le coup de poing n'est pas actionné.

Le boîtier de dégagement 20 comporte en outre deux autres relais, à savoir un relais de dégagement de l'axe du moteur dans un sens positif et un relais de dégagement de l'axe du moteur dans un sens négatif, les sens positif et négatif étant choisis de manière arbitraire. Le relais de dégagement dans le sens positif se compose d'une bobine 70, d'un bouton poussoir 72 qui interrompt l'alimentation en courant électrique de la bobine 70 à partir de la source de courant auxiliaire 22. Le relais de dégagement de l'axe dans le sens positif comporte encore un contact de travail 74 installé sur la ligne aller 68 qui relie la source 22 à une des bornes du moteur 14 et un contact de travail 75 installé sur la ligne 69 de retour qui relie la source auxiliaire 22 à l'autre borne du moteur 14. Les contacts 74 et 75 sont normalement ouverts et se ferment lorsque la bobine 70 est alimentée en courant électrique par une action de l'opérateur sur le bouton poussoir 72.

Enfin, le boîtier de dégagement 20 comporte de manière similaire, un relais de dégagement de l'axe dans le sens négatif qui permet d'inverser le sens de rotation du moteur 14. Ce relais se compose d'une bobine 80 et d'un interrupteur 82 qui permet de mettre la bobine 80 sous tension en la reliant à la source de courant auxiliaire 22. Le relais de commande de la rotation de l'axe dans le sens négatif comporte encore un contact de travail 84 monté sur une ligne qui relie les lignes aller 68 et retour 69. Une première extrémité de la ligne 87 est connectée à la ligne 69 en aval du contact de repos 75, par rapport à la source 22, tandis que l'autre extrémité de cette ligne 87 est connectée en amont du contact 74, par rapport à la source auxiliaire de courant continu 22. Le relais de dégagement dans le sens négatif comporte également un deuxième contact de travail 85 intercalé sur une ligne 88 dont une première extrémité est connectée à la ligne 69 en amont du contact 75 par rapport à la source auxiliaire de courant continu 22. L'autre extrémité de la ligne 88 est connectée en aval du contact 74 monté sur la ligne 68. Les contacts 84 et 85, comme les contacts 74 et 75, sont des contacts de travail, ce qui signifie qu'ils ne sont fermés que lorsque la bobine 80 est alimentée en courant électrique.

Lorsque chacun des boutons poussoirs 72 et 82 est au repos, aucun des contacts 74, 75, 84 et 85 n'est fermé. En conséquence, pour que le moteur 14 soit relié à la source auxiliaire de courant continu 22, il est nécessaire d'une part que le bouton poussoir du coup de poing 26 ait été actionné, et d'autre part, que l'un au moins des boutons poussoirs 72 et 82 soit enfoncé.

Il convient de noter que lorsque le coup de poing a été actionné, les contacts 66 restent en position fermée. Au contraire, les contacts 74 et 75 d'une part et les contacts 84 et 85 d'autre part s'ouvrent dès que la pression sur les boutons poussoirs 72 et 82 est relâchée.

On remarque que la combinaison des contacts 74, 75, 84 et 85 permet d'inverser la polarité du courant électrique qui alimente le moteur 14. En effet, lorsque les contacts 74 et 75 sont fermés, le courant circule dans un sens. Au contraire, lorsque ce sont les contacts 84 et 85 qui sont fermés, les contacts 74 et 75 étant ouverts, le courant circule dans l'autre sens. En conséquence, le sens de rotation du moteur est inversé.

Le boîtier de dégagement 20 est relié par des câbles électriques souples de longueurs suffisantes qui permettent à l'opérateur de l'emmener en permanence avec lui où qu'il se trouve lorsqu'il travaille sur la machine. En revanche, la source auxiliaire est fixe. Ainsi, l'opérateur peut accéder au coup de poing 26 quelle que soit sa position. En outre, le coup de poing ayant été actionné, la commande numérique 2 est mise hors circuit et l'alimentation à partir de la source 40 est stoppée de telle sorte que l'opérateur peut commander à petite vitesse, le déplacement de l'axe du moteur en se servant des boutons poussoirs 72 et 82. En outre, comme on le décrira plus en détail ultérieurement, la face avant du boîtier de dégagement comporte un schéma qui représente les axes de la machine. Les boutons poussoirs 72 et 82 sont disposés par rapport à ce schéma de manière que l'opérateur puisse compre ndre immédiatement sans formation préalable et sans connaissance particulière de la machine dans quel sens l'axe se déplacera s'il appuie sur l'un des deux boutons. L'opérateur peut ainsi se dégager par lui-même sans aide extérieure.

Dans l'exemple de réalisation représenté sur la figure 3, le dispositif comporte en outre un bouton 90 de réglage de 3, le dispositif comporte en outre un bouton 90 de réglage de vitsse. Ce bouton permet d'actionner un potentiomètre (non représenté) aux bornes duquel sont reliées les lignes 68 et 69. En actionnant ce potentiomètre, l'opérateur augmente ou diminue la tension disponible aux bornes du moteur et, par suite, la vitesse de rotation de ce moteur. Le bouton 90 peut être installé sur la source auxiliaire de courant continu 22 comme représenté sur la figur 3. Mais il peut également être monté sur le boîtier de dégagement 20. Dans ce dernier cas, l'opérateur peut faire varier la vitesse de rotation du moteur quelle que soit sa position par rapport à la machine.

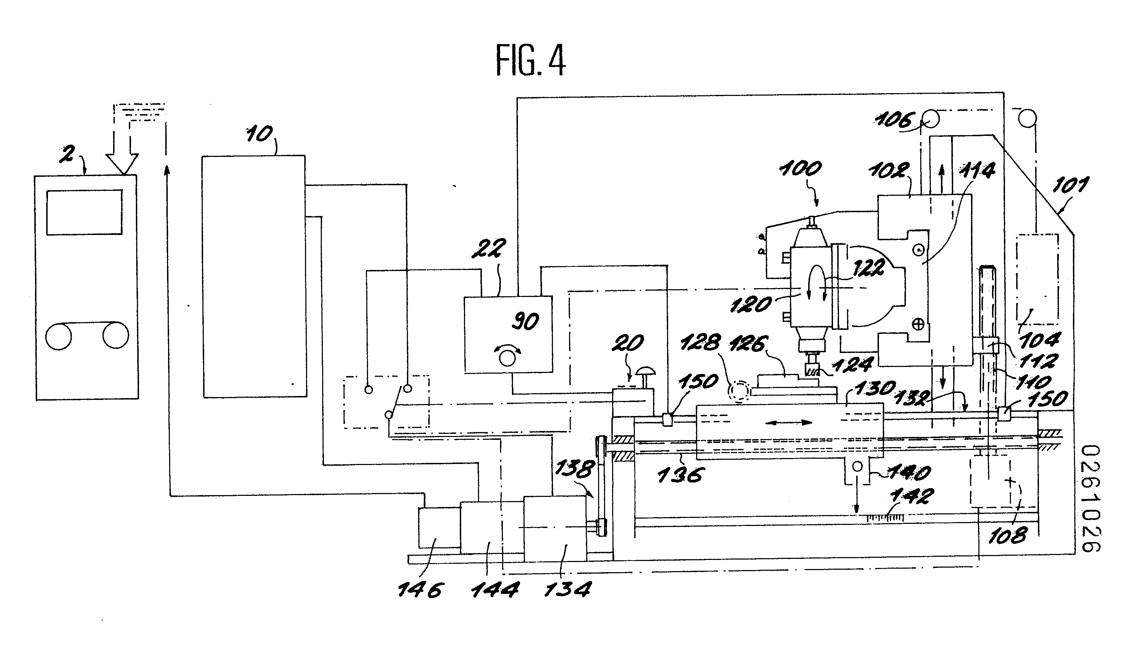

On a représenté sur la figure 4, une vue en élévation latérale d'une fraiseuse désignée par la référence générale 100 sur laquelle on a installé un dispositif de sécurité conforme à l'invention.

La fraiseuse 100 comporte un bâti 102 sur lequel un support de bras 104 est monté coulissant par l'intermédiaire d'une glissière verticale. La masse du support de bras 102 est équilibrée par l'intermédiaire d'un contre-poids 104 relié au support de bras par un câble passant sur deux poulies 106. Un moteur 108 permet de faire monter et de baisser le support de bras 102. Ce moteur entraîne par exemple une vis qui traverse une noix filetée qui est déplacée verticalement lorsque la vis est entraînée en rotation par le moteur.

Un bras horizontal 114 est monté coulissant horizontalement à l'intérieur du bras support 102. Un bras horizontal 114 est entraîné dans un sens et dans l'autre par un moteur d'entraînement (non représenté).

La broche de la fraiseuse est montée à l'intérieur d'une tête orientable 120 qui peut être orientée en rotation comme schématisé par la fléche 122 par rapport au bras 114. L'orientation de la tête n'est pas commandée par un moteur, mais réglée une fois pour la durée de l'opération d'usinage. La tête étant placée dans une orientation convenable pour que la fraise 124 usine la pièce 126 montée sur un plateau diviseur 128, la position de la tête 120 est bloquée par des boulons.

Le plateau diviseur 128 est monté sur une table mobile 130 qui se déplace sur un bras 132. La table est entraînée horizontalement sur le banc 132 par l'intermédiaire d'un moteur 134 dont le couple est transmis à une vis 136 par l'intermédiaire de pignons réducteurs 138. Un viseur optique 140 et une règle étalon graduée 142 permettent de repérer la position de la table 130 par rapport au bâti 100. Un tachymètre 144 permet de détecter la vitesse de rotation du moteur 134 et de fournir un signal représentatif de cette vitesse aux variateurs de vitesses électroniques 10. Un capteur de positions 146 détecte la position de la table 130 et fournit un signal correspondant à la commande numérique 2.

Des butées réglables de fin de course 150 sont montées à chacune des extrémités du banc 132.

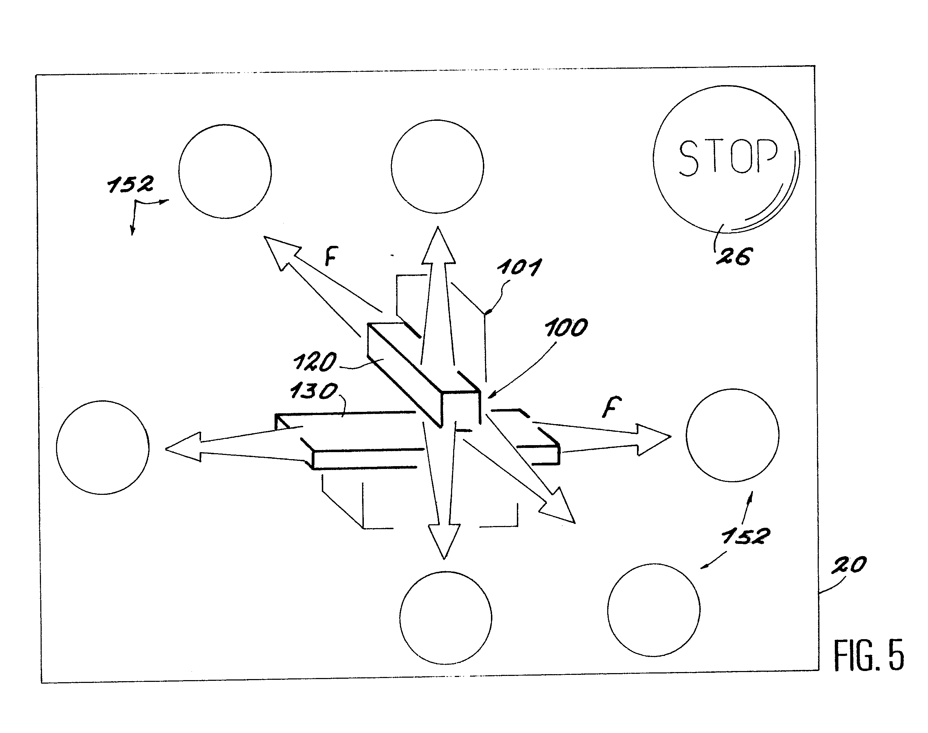

On a représenté sur la figure 5 la face avant d'un boîtier de commande faisant partie d'un dispositif de sécurité conforme à l'invention. On a représenté le contour schématique de la fraiseuse 100 comportant trois axes de déplacement, à savoir le déplacement de la table 130, le déplacement horizontal et le déplacement vertical d'un bras 120 supportant une broche (non représentée). Chaque déplacement peut être effectué dans deux sens opposés, comme représenté par chacune des deux flèches figurées à chaque extrémité d'un axe de déplacement. Un bouton poussoir 152 est situé dans le prolongement de chacune des flèches f. Comme on l'a expliqué précédemment, ces boutons poussoirs permettent de commander l'alimentation en courant électrique de bobines de relais qui actionnent des contacts de repos ou de travail, comme par exemple les contacts représentés sur la figure, afin d'alimenter en courant électrique, et dans le sens voulu, le moteur qui entraîne l'axe correspondant. Bien entendu, comme on l'a expliqué, la source électrique utilisée est la source de puissance auxiliaire.

## Revendications

1. Dispositif de sécurité pour machine, notamment une machine-outil (100), ladite machine comprenant au moins un moteur (14) relié à une source de puissance principale (10) et entraînant un organe mobile (102), comportant :
- une source de puissance auxiliaire (22),
- un moyen pour couper l'alimentation en puissance du moteur (44) de la machine par la source de puissance principale (40) et pour connecter simultanément ce moteur à ladite source de puissance auxiliaire (22),
caractérisé en ce qu'il comporte un moyen pour commander le moteur à petite vitesse et un moyen (20b, 20c) pour commander le moteur dans un sens voulu de manière à permettre le dégagement par lui-même d'un opérateur.

2. Dispositif selon la revendication 1, caractérisé en ce que le moyen pour commander le moteur dans un sens voulu comprend un premier et un second conducteurs d'interconnexion (87, 88) reliant le conducteur aller (68) au conducteur retour (69), un relais de commande du moteur dans un sens positif, ce relais comprenant une bobine (70) reliée à la source de puissance auxiliaire (22) et deux contacts de travail (74, 75) intercalés sur lesdits conducteurs électriques aller et retour (68, 69), et un bouton poussoir (72) pour fermer un circuit d'alimentation électrique reliant ladite bobine (70) à la source de puissance auxiliaire (22), un relais de commande du moteur dans un sens négatif, ce relais comprenant une bobine reliée à la source de puissance auxiliaire et deux contacts de travail (84, 85) intercalés sur lesdits conducteurs d'interconnexion (87, 88) et un bouton poussoir pour fermer un circuit d'alimentation électrique reliant la bobine du relais à la source de puissance auxiliaire.

3. Dispositif selon la revendication 1 ou 2, caractérisé en ce que la source de puissance auxiliaire (22) est reliée audit moteur (14) par un conducteur électrique aller (68) et un conducteur électrique retour (69) et en ce que les moyens pour couper l'alimentation en puissance de ce moteur par la source principale sont constitués par un relais comprenant une bobine (60), au moins un premier contact (66) qui est en position ouverte lorsque la bobine (60) n'est pas alimentée en courant électrique et au moins un second contact (64) qui est en position fermée lorsque la bobine (60) est alimentée en courant électrique, ledit premier contact (66) étant monté sur l'un au moins des conducteurs électriques (68) reliant la source de puissance auxiliaire (22) au moteur (44), ledit second contact (64) étant monté sur au moins un conducteur électrique (46) reliant la source de puissance principale (10) au moteur (14), la source de puissance électrique auxiliaire (22) étant utilisée comme source électrique pour alimenter en courant électrique ladite bobine (60), un interrupteur (62) étant prévu pour commander la fermeture du circuit d'alimentation électrique de la bobine (60) du relais.

4. Dispositif selon la revendication 3, caractérisé en ce que l'interrupteur (62) prévu pour commander la fermeture du circuit d'alimentation de la bobine (60) du relais est un interrupteur poussoir de type coup de poing.

5. Dispositif selon l'une quelconque des revendications 3 et 4, caractérisé en ce que la source de puissance auxiliaire (22) est une source de courant continu.

6. Dispositif selon la revendication 5, caractérisé en ce qu'il comprend en outre un potentiomètre qui permet de faire varier la tension de sortie de la source de courant continu.

7. Dispositif selon l'une quelconque des revendications 1 à 3, caractérisé en ce que le moteur (44) de la machine est un moteur courant alternatif et en ce que la source de puissance auxiliaire (22) comprend une source de courant continu et un onduleur relié à ladite source d courant continu pour transformer le courant continu en courant alternatif.

8. Dispositif selon la revendication 7, caractérisé en ce que la source de puissance auxiliaire comprend un variateur de fréquence pour faire varier la fréquence du courant délivré par l'onduleur.

9. Dispositif selon l'une quelconque des revendications 1 à 8, caractérisé en ce qu'il comporte un boîtier (20) dans lequel sont regroupés l'interrupteur de type coup de poing, le bouton poussoir (72) pour fermer le circuit de manière à commander le moteur dans un sens positif, le bouton poussoir pour fermer le circuit de manière à commander le moteur dans un sens négatif, ce boîtier (20) étant relié par des conducteurs électriques d'une part à la source de puissance auxiliaire (22) et d'autre part à la bobine (60) qui commande l'ouverture des contacts de repos (64) intercalés sur les lignes d'alimentation en puissance du moteur à partir de la source principale (10) et la ferme ture des contacts de travail (66) intercalés sur les conducteurs électriques (68, 69) qui alimentent le moteur (22) à partir de la source de puissance auxiliaire (22), à la bobine (72) qui commande la fermeture des contacts de travail (74, 75) intercalés sur les conducteurs électriques d'aller (68) et de retour (69) pour commander la rotation du moteur (22) dans un sens positif, et à la bobine qui commande la fermeture des contacts de travail intercalés sur les conducteurs d'interconnexion (87, 88) pour commander la rotation du moteur dans un sens négatif.

10. Dispositif selon la revendication 9, caractérisé en ce que ledit potentiomètre permettant à l'opérate ur de faire varier la vitesse d'un moteur à courant continu est également monté dans le boîtier (20).

11. Dispositif selon la revendication 9, caractérisé en ce que le variateur de vitesse permettant à l'opérateur de faire varier la vitesse d'un moteur à courant alternatif est également monté dans le boîtier (20).

12. Dispositif selon l'une quelconque des revendications 1 à 11, caractérisé en ce que la machine (100) comporte plusieurs axes et un moteur distinct pour entraîner chaque axe respectivement, ledit boîtier (20) comportant un bouton poussoir destiné à commander chaque moteur dans un sens positif et dans un sens négatif.

13. Dispositif selon l'une quelconque des revendications 1 à 12, caractérisé en ce que la face avant du boîtier comporte un schéma (100) de la machine indiquant par des flèches le sens de déplacement des axes, des boutons poussoirs (152) destinés à commander la rotation des moteurs entraînant ces axes dans un sens positif et dans un sens négatif respectivement étant disposés dans le prolongement des flèches de ce schéma.

FIG. 1

FIG. 2

0261026

FIG. 3

FIG. 4

FIG. 5

152

STOP

26

101

100

120

130

F

F

152

20

0261026

**Office européen des brevets**

# RAPPORT DE RECHERCHE EUROPEENNE

Numero de la demande

EP 87 40 2044

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 576 818 (S.R.C.F.) <br> * Page 1, lignes 1-39; page 4, lignes 26,27; figure 2 * | 1,3-8 | B 23 Q 5/58 <br> B 23 Q 11/00 <br> F 16 P 3/00 |
| A | | 2,9-13 | |
| A | DE-C- 975 140 (BRINKMANN) <br> * Page 2, lignes 53-82 * | 1,3-8 | |
| A | CH-A- 247 058 (BERTHIEZ) <br> * Page 1, lignes 40-63; page 2, lignes 1-49; figure 2 * | 12,13 | |
| A | US-A-2 934 861 (ENGEL) <br> * Colonne 1, lignes 15-28; colonne 2, lignes 12-30; figure unique * | 12 | |

DOMAINES TECHNIQUES RECHERCHES (Int. Cl.4)

B 23 Q
F 16 P

Le présent rapport a été établi pour toutes les revendications

| Lieu de la recherche | Date d'achèvement de la recherche | Examinateur |
|---|---|---|
| LA HAYE | 18-11-1987 | KUHN E.F.E. |